# EUROPEAN PATENT SPECIFICATION

(11) **EP 3 347 666 B1**
(45) Date of publication and mention of the grant of the patent: **11.03.2020**
(21) Application number: 16778124.4
(22) Date of filing: 07.09.2016
(51) Int. Cl.: F28F 1/42, F24H 1/36, F24H 9/00, F28F 13/08, F28F 1/02, F28F 1/06

(54) **FLAME PIPE OF A CONDENSING HEAT EXCHANGER**
FLAMMROHR EINES KONDENSATIONSWÄRMETAUSCHERS
TUBE À FLAMME D'UN ÉCHANGEUR DE CHALEUR À CONDENSATION

(30) Priority: 11.09.2015 PL 41391915
(43) Date of publication of application: 18.07.2018
(73) Proprietor: AIC Spólka Akcyjna, 81-577 Gdynia (PL)
(72) Inventor: SZCZEPANSKI, Krzysztof, 83-110 Tczew (PL); DLUGOWSKI, Dariusz, 81-261 Gdynia (PL)
(74) Representative: Pomianek, Grazyna
(86) International application number: PCT/PL2016/000095
(87) International publication number: WO 2017/043990

(56) References cited:
- EP-A2- 1 734 326
- US-A- 1 922 838
- US-A1- 2008 029 243
- US-A1- 2014 196 872

## Description

The invention concerns a flame pipe of condensing heat exchangers designated for central heating and utility water installations.

Known are heat exchanger pipes fitted with devices to turbulise the combustion gases flowing inside the pipes, which intensify the heat exchange process.

Known from published European patent application EP2384837 is a heat exchanger pipe of other-than-circular shape in cross-section, rectangular in particular, made of a pipe circular in cross-section and having undulated surface with the undulation spreading both sideways and lengthways and the amplitude of the undulation ranging from 0.2 to 1.2 of the outer diameter of the pipe circular in cross-section.

Known from the published European patent application EP1429085 is a pipe the shape of which in cross section changes along its length and with a flat section in the centre.

US 2008/029243 A1 and US 2014/196872 disclose flame pipes having the features in the preamble of claim 1.

The purpose of the invention is to develop a flame pipe for a fired condensing heat exchanger which would intensify the heat exchange process while reducing the flow resistance of the combustion gas and retaining the condensing nature of the processes which occur in the exchanger.

The purpose was achieved by developing a new geometry of the flame pipe.

A flame pipe of a condensing heat exchanger having pairs of longitudinal dents shaped coaxially with respect to the pipe axis, where the dents are trapezoid in longitudinal section, positioned opposite each other, pointing towards the centre of the pipe and forming a section, and the distance between the dents in the section measured inside the pipe is 0.5 mm or less, and the adjacent dent sections are positioned at an angle of 90° to one another, where the ratio of the pipe length to the inner pipe diameter measured in the cylindrical part devoid of dents falls within the range from 26 to 29, according to the invention is characterised in that a bottom of each dent is flat with additional dents pointing towards the centre of the pipe.

Preferably, the ratio of the dent length to the inner diameter of the pipe measured in the cylindrical part devoid of dents ranges from 2.5 to 3, and the ratio of the dent depth to its length ranges from 0.1 to 0.2. The dent sections are arranged at either non-equal distances along the pipe length.

The pipe sections are different lengths.

The designed proportions between the pipe dimensions and the shape and arrangement of the dents according to the invention ensures retaining the condensing nature of the processes which occur in the exchanger while reducing the flow resistance of the combustion gases inside the pipes and increasing the flow turbulences.

Further benefits and advantages of the present invention will become apparent after a careful reading of the detailed description with appropriate reference to the accompanying drawings.

In the drawings:

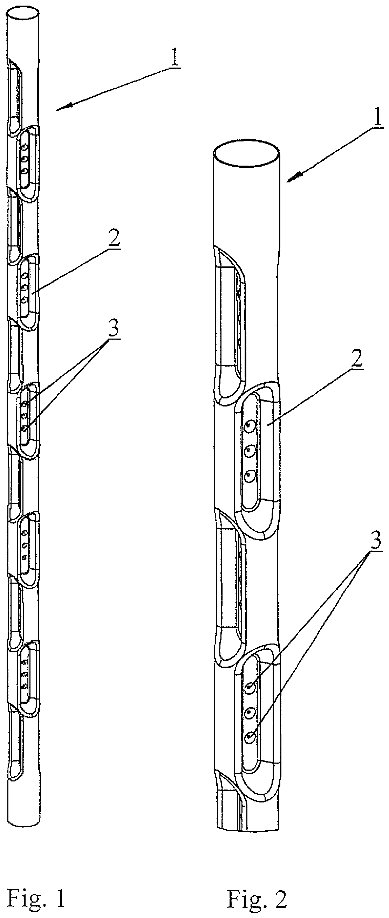

Fig.1 and Fig. 2 show the pipe in the isometric projection;

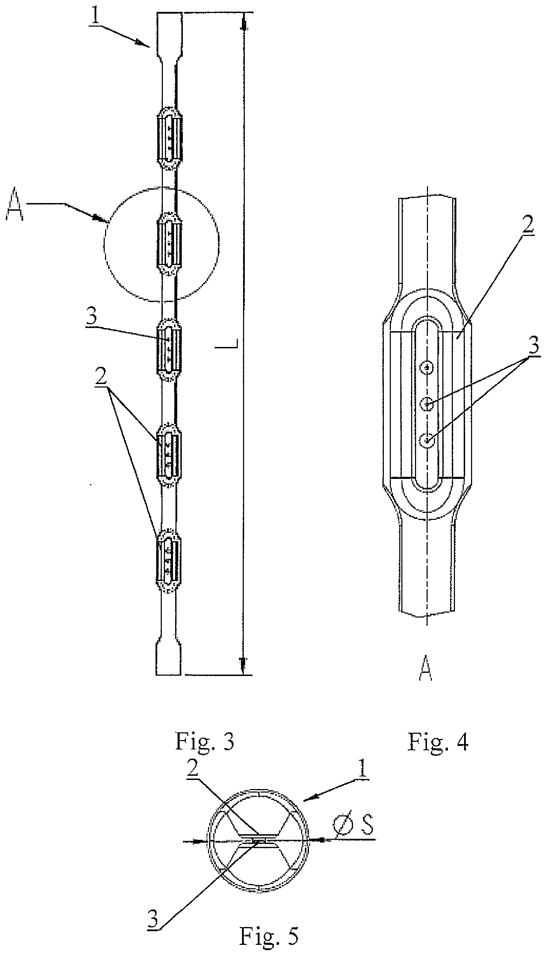

Fig.3 and Fig.4 show the pipe as in Fig. 1 in side view;
Fig.5 depicts the pipe as in Fig. 1 in bird's eye view;

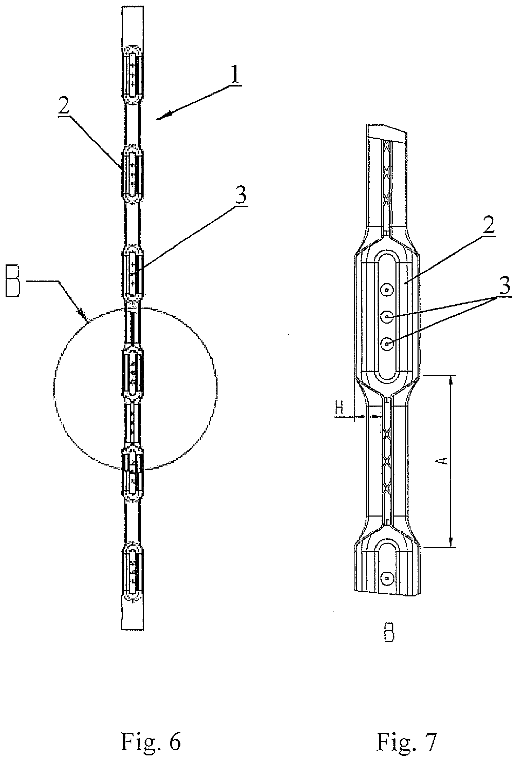

Fig.6 and Fig.7 illustrate the pipe as in Fig. 1 in axial section.

In the exemplary embodiment, a flame pipe of a condensing heat exchanger features pairs of longitudinal dents 2 shaped at even distances along the length L of pipe 1, coaxially with respect to the axis of pipe 1, where the dents are trapezoid in longitudinal section and of the same length, positioned opposite one another, pointing towards the centre of the pipe 1 and forming a section. In addition, there are dents 3 pointing towards the centre of pipe 1 formed in the bottom of dents 2. The distance between the dents 2 in the section measured inside the pipe is 0.3 mm or less, and the adjacent dent sections are positioned at an angle of 90° to one another. The ratio of the pipe length L to the inner diameter S of the pipe 1 measured in the cylindrical part devoid of dents is 27, and the ratio of the length A of the dent 2 to the inner diameters S of the pipe 1 measured in the cylindrical part devoid of dents if 2.8, while the ratio of the depth H of dent 2 to its length A is 0.15 or more.

In another embodiment of the invention dents 2 can be arranged at non-even distances.

In yet other embodiments of the invention the ration of pipe length L to its inner diameter S measured in the cylindrical part devoid of the dents falls within the range from 26 to 29, the region of the dent length to the inner diameter of the pipe measured in the cylindrical part without dents ranges from 2.5 to 3, and the ratio between the dent depth and its length ranges from 0.1 to 0.2.

In the invention embodiments described above dents 2 may be either of the same or different lengths.

It has been found that with the combustion gas temperature at the flame pipe inlet ranging from 1450 to 1550 °C, the flow of the combustion gas in the flame pipe between 7.0 arid 8.0 kg/h (for natural gas, CO₂ = 9%), and the initial temperature of 26 °C and dT=55K of the heated liquid in counterflow of 80-90 l/h per pipe, the combustion gas reaches the dew point at the distance of 850 - 1050 mm from the pipe inlet, and the pressure drop does not exceed 750Pa.

## Claims

1. A flame pipe of a condensing heat exchanger having pairs of longitudinal dents (2) shaped coaxially with respect to the axis of the pipe (1), where the dents are trapezoid in longitudinal section, positioned opposite each other, pointing towards the centre of the pipe (1) and forming a section, and the distance between the dents (2) in the section measured inside the pipe (1) is 0.5 mm or less, and the adjacent dent sections are positioned at an angle of 90° to one another, where the ratio of the pipe length (L) to the inner diameter (S) of the pipe (1) measured in the cylindrical part devoid of dents falls within the range from 26 to 29, **characterised in that** a bottom of each dent (2) is flat with additional dents (3) pointing towards the centre of the pipe (1).

2. The pipe according to Claim 1, **characterised in that** the ratio of the length (A) of the dent (2) to the inner diameter (S) of the pipe (1) measured in the cylindrical section devoid of dents ranges from 2.5 to 3.

3. The pipe according to Claims 1 or 2, **characterised in that** the ratio of the depth (H) of the dent (2) to its length (A) ranges from 0.1 to 0.2.

4. The pipe according to Claims 1, or 2, or 3, **characterised in that** the sections of the dents (2) are of different lengths (A).

## Patentansprüche

1. Flammrohr eines Kondensationswärmctauschers mit Paaren von länglichen Vertiefungen (2) mit einem trapezförmigen Längsquerschnitt, die koaxial zur Achse des Rohrs (1) verlaufen und die einander gegenüberliegend und der Mitte des Rohres (I) zugewandt angeordnet sind und so einen Abschnitt bilden, wobei der Abstand zwischen den Vertiefungen (2) im Abschnitt innerhalb des Rohres (1) höchstens 0,5 mm beträgt und die aneinander grenzenden Abschnitte der Vertiefungen in einem Winkel von 90° zueinander liegen, wobei das Verhältnis der Länge (L) des Rohres (1) zu seinem Innendurchmesser (S), gemessen im zylindrischen Teil ohne die Vertiefungen, zwischen 26 und 29 beträgt, **dadurch gekennzeichnet, dass** weitere Vertiefungen (3), die zur Mitte des Rohres (1) zugewandt sind, am Boden jeder Vertiefung (2) ausgeführt sind.

2. Ein Rohr nach dem Anspruch 1, **dadurch gekennzeichnet, dass** das Verhältnis der Länge (A) der Vertiefung (2) zum Innendurchmesser (S) des Rohres (1), gemessen am zylindrischen Teil ohne Vertiefungen, zwischen 2,5 und 3 liegt.

3. Ein Rohr nach dem Anspruch 1 oder 2, **dadurch gekennzeichnet, dass** das Verhältnis der Tiefe (H) der Vertiefung (2) zu ihrer Länge (A) im Bereich zwischen 0,1 bis 0,2 liegt.

4. Ein Rohr nach dem Anspruch 1 oder 2 oder 3, **dadurch gekennzeichnet, dass** die Abschnitte mit Vertiefungen (2) unterschiedliche Längen (A) haben.

## Revendications

1. Tube à flamme d'un échangeur de chaleur à condensation ayant des paires d'enfoncements (2) longitudinales formés coaxialement à l'axe du tuyau (1) à section longitudinale trapézoïdale, opposés les unes aux autres, orientés vers le centre du tuyau (1), formant une section, la distance entre les enfoncements (2) dans la section à l'intérieur du tuyau (1) étant d'au plus 0,5 mm et les sections adjacentes de l'enfoncement sont positionnées à un angle de 90° les unes par rapport aux autres, le rapport de la longueur (L) du tuyau (1) à son diamètre intérieur (S) mesuré dans la partie cylindrique sans les enfoncements étant de 26 à 29, **caractérisée en ce que** le fond de chaque empreinte (2) présente en outre des empreintes (3) orientés vers le centre du tuyau (1).

2. Tube selon la revendication 1, **caractérisée en ce que** le rapport de la longueur (A) de l'enfoncement (2) au diamètre intérieur (S) du tuyau (1) mesuré dans la partie cylindrique sans empreinte est de 2,5 à 3.

3. Tube selon la revendication 1 ou 2, **caractérisée en ce que** le rapport de la profondeur (H) de l'enfoncement (2) sur sa longueur (A) est de 0,1 à 0,2.

4. Tube selon la revendication 1 ou 2 ou 3, **caractérisée en ce que** les sections d'enfoncements (2) ont des longueurs différentes (A).
